Europäisches Patentamt

European Patent Office

Office européen des brevets

(11) Numéro de publication: **0 395 472**
**A1**

## DEMANDE DE BREVET EUROPEEN

(21) Numéro de dépôt: 90401032.9

(22) Date de dépôt: **17.04.90**

(51) Int. Cl.⁵: **C01F 17/00, C22B 59/00**

(30) Priorité: **28.04.89 FR 8905662**

(43) Date de publication de la demande:
**31.10.90 Bulletin 90/44**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Picard, Françoise**
**50, avenue de la Dame Blanche**
**F-94120 Fontenay-sous-Bois(FR)**

(74) Mandataire: **Esson, Jean-Pierre et al**
**RHONE-POULENC CHIMIE Service Brevets**
**Chimie 25, quai Paul Doumer**
**F-92408 Courbevoie Cedex(FR)**

(54) **Halogénures de terres rares déshydratés et procédé de production de ceux-ci.**

(57) La présente invention concerne des halogénures de terres rares déshydratés et un procédé de production de ceux-ci.

Elle concerne plus particulièrement un halogénure de terre rare de type chlorure, bromure, iodure contenant moins de 1,5 % en poids d'eau et moins de 3 % en poids d'oxyhalogénure. Cet halogénure est obtenu par déshydratation d'un halogénure hydraté par passage d'un courant d'un agent déshydratant halogéné (hydrure d'halogène) à travers la masse à déshydrater.

EP 0 395 472 A1

## HALOGENURES DE TERRES RARES DESHYDRATES ET PROCEDE DE PRODUCTION DE CEUX-CI

La présente invention concerne des halogénures de terres rares déshydratés et un procédé de production de ceux-ci.

Elle concerne plus particulièrement des halogénures de terres rares du type chlorure, bromure ou iodure comprenant un très faible pourcentage d'eau et une très faible teneur en oxyhalogénure.

Les halogénures de terres rares sont fabriqués généralement en milieu aqueux, par exemple, par attaque acide en milieu aqueux d'un oxyde de terre rare.

Ainsi les halogénures obtenus, à l'exception du fluorure sont des halogénures hydratés comprenant plusieurs molécules d'eau, typiquement de 3 à 9 par molécule d'halogénure.

Cette eau de structure peut être gênante dans certaines applications, ou utilisations des halogénures telles que par exemple, les procédés de réduction chimique ou électrochimique pour la production de métal comme la production de néodyme ou d'alliage de celui-ci avec d'autres métaux.

De nombreux procédés de déshydratation de ces halogénures de terres rares hydratés ont été proposés dans la littérature.

Ainsi, VW. Wendlandt dans J. Inorg. Nucl. Chem. 5 (1957) 118, a étudié la décomposition thermique des chlorures de terres rares hydratés. Cette déshydratation permet d'obtenir le monohydrate d'halogénure. Toutefois, l'élimination de cette dernière molécule d'eau demande un chauffage à une température supérieure à 200°C. A cette température les halogénures de terres rares se transforment en oxyhalogénures. La présence de ces oxyhalogénures est également très gênante dans les procédés de production de métal cités ci-dessus.

Il a également été proposé des procédés de déshydratation utilisant un agent de déshydratation tel que les halogénures d'hydrogène, halogénures d'ammonium, le tétrachlorure de carbone, le phosgène ou $SOCl_2$ ainsi que les halogènes. Les procédés décrits notamment par Matignon (C.R. accord. Sci. 134 (1902), 427) et Kleinheksel et Kremers (JACS 50 (1928), 959) consistent à faire passer un courant gazeux d'agent de déshydratation sur l'halogénure hydraté. Toutefois, ces procédés ne permettent pas d'abaisser la concentration en eau et/ou en oxyhalogénure à des valeurs faibles, notamment quand la masse d'halogénures de terres rares à déshydrater est importante.

De tels procédés sont donc inexploitables industriellement.

La présente invention a notamment pour but de remédier à tous ces inconvénients en proposant un procédé permettant de déshydrater des halogénures de terres rares hydratés pour produire industriellement des halogénures contenant de faibles teneurs tant en eau qu'en oxyhalogénure.

A cet effet, l'invention propose des halogénures de terres rares déshydratés, à l'exception des fluorures, comprenant entre 0,01 % et 1,5 % d'eau et entre 0,01 % et 4 % d'oxyhalogénure de terres rares.

Selon une autre caractéristique de l'invention, les halogénures de terres rares comprennent entre 0,01 % et 1 % d'eau, avantageusement entre 0,01 et 0,8 % d'eau.

Selon encore une autre caractéristique, les halogénures de terres rares de l'invention contiennent entre 0,01 % et 2 % d'oxyhalogénure de terres rares, avantageusement entre 0,01 % et 1 % d'oxyhalogénure.

Ces pourcentages correspondent à des teneurs pondérales exprimés par rapport au poids d'halogénure.

L'expression "terres rares" (TR) utilisée conformément à l'invention comprend les éléments terres rares appelés lanthanides ayant des numéros atomiques de 57 à 71 inclus et l'yttrium de numéro atomique égal à 39. De plus, on désigne par "terres rares cériques", les éléments les plus légers commençant avec le lanthane et s'étendant au samarium conformément au numéro atomique et par "terres rares yttriques", les éléments les plus lourds des terres rares commençant par l'europium et finissant par le lutécium et comprenant l'yttrium.

L'invention s'applique à tous les halogénures de ces éléments et notamment aux halogénures de lanthane, néodyme, cérium, praséodyme, yttrium, gadolinium.

Bien entendu, l'invention s'applique uniquement aux halogénures de terres rares hydratés. Ainsi, l'invention ne s'applique pas aux fluorures de terres rares qui ne contiennent pas d'eau d'hydratation, ou halogénures de terres rares obtenus par voie anhydre.

L'invention a également pour objet un procédé permettant d'ob tenir les halogénures de terres rares de l'invention par déshydratation d'halogénures hydratés. Ce procédé consiste à faire passer à travers la masse d'halogénures à déshydrater portée à une température comprise entre 150 et 350°C, un courant gazeux comprenant au moins un composé halogéné déshydratant.

Les températures ou domaines de températures optimales de déshydratation sont différents pour chaque halogénure de terre rare et sont notamment dépendents de la température de déshydratation à laquelle la dernière molécule d'eau de l'halogènure hydraté s'évapore.

Bien entendu, les halogénures à déshydrater et les composés halogénés déshydratants possèdent avantageusement des atomes d'halogène de même nature.

Comme composés halogénés déshydratants convenables, on peut citer à titre d'exemple les halogénures d'hydrogène, halogénures d'ammonium, les halogènes, le tétrachlorure de carbone, le phosgène $SOCl_2$, $S_2Cl_2$. Les composés préférés sont les halogénures d'hydrogènes tels que le chlorure d'hydrogène ou les halogénures d'ammonium.

Ces composés peuvent être utilisés seuls, en mélange, ou en mélange dans un gaz vecteur sec tel que l'azote, l'air par exemple.

La masse d'halogénures de terres rares à déshydrater est de préférence introduite dans le réacteur pour former un lit d'halogénures, la déshydratation étant obtenue par passage d'un courant gazeux de composés halogénés déshydratants à travers ce lit d'halogénures, par exemple par la technique de "percolation".

L'invention sera illustrée par les exemples donnés ci-dessous uniquement à titre indicatif.

## Exemple 1

15 grammes de chlorure de néodyme hexahydraté sont introduits dans un réacteur. Ce lit de chlorure de néodyme est traversé par un courant de chlorure d'hydrogène et le chlorure est chauffé jusqu'à 250° C. Cette température est maintenue pendant 4 heures. Il a été consommé 1,4 g de chlorure d'hydrogène par gramme de chlorure de néodyme hexahydraté.

Le produit obtenu présente une teneur pondérale en eau de 0,8 % et en oxychlorure de 0,5 %.

## Exemple 2

Dans cet exemple, on utilise un chlorure de néodyme préséché par séchage sous vide partiel, dans un four tubulaire porté à 240° C. Ce chlorure de néodyme préséché comprend 1,5 % d'eau et 6 % d'oxychlorure.

Ce chlorure de néodyme préséché est traité selon le mode opératoire décrit à l'exemple 1, toutefois la température de séchage est de 300° C, et la consommation HCl par gramme de chlorure mis en oeuvre est de 2 grammes.

Le chlorure de néodyme obtenu contient 0,2 % en eau et 0,2 % en oxychlorure.

## Exemple 3

L'exemple 2 est répété mais avec une température de séchage égale à 200° C et une consommation de HCl par gramme de chlorure mis en oeuvre égale à 0,5 gramme.

Le chlorure obtenu contient 0,4 % en eau et 0,2 % en oxychlorure.

## Exemple 4

L'exemple 2 est répété mais en utilisant comme mélange gazeux déshydratant un flux de chlorure d'hydrogène dilué dans de l'air sec (pression partielle en HCl égale à environ 0,13 atm).

La température de séchage est de 300° C et la consommation en HCl de 0,5 gramme par rapport au chlorure mis en oeuvre.

Le chlorure de néodyme obtenu contient 0,3 % en eau et 0,15 % en oxychlorure.

## Exemple 5

On répète l'exemple 1, mais en déshydratant du chlorure de lanthane heptahydraté. La température de séchage est de 300° C.

Le chlorure de lanthane obtenu contient 0,4 % d'eau et 0,1 % d'oxychlorure.

## Exemple 6

L'exemple 1 est répété avec du chlorure de praséodyme hexahydraté et une température de séchage de 240° C.

Le chlorure de praséodyme obtenu contient 0,5 % $H_2O$ et 0,1 % d'oxychlorure.

## Exemple 7

L'exemple 2 est répété mais en utilisant comme composé déshydratant un flux de chlore. La température de séchage est de 250° C. La consommation en chlore est de 7 g par gramme de chlorure de néodyme.

Le chlorure obtenu contient 1,2 % d'eau et 3,7 % d'oxychlorure.

## Exemple 8

L'exemple 2 est répété mais en utilisant le mélange de chlore et de chlorure d'hydrogène ($P_{HCl}$ = 0,7 atm $P_{Cl2}$ = 0,3 atm). La température de séchage est de 300° C et la consommation de HCl est de 4,3 g/g de $NdCl_3$, mis en oeuvre celle de $Cl_2$ étant de 3,7 g/g de $NdCl_3$.

Le chlorure obtenu contient 0,2 % d'eau et 0,2 % d'oxychlorure.

## Exemple 9 comparatif

Une masse de $NdCl_3$ préséché sous vide partiel, contenant 2,5 % d'eau et 6 % d'oxychlorure de néodyme est disposée dans un four tubulaire. Un courant d'acide chlohydrique gazeux porté à 250° C est alimenté dans le four.

Le composé obtenu contient 2 % d'eau et 0,3 % d'oxychlorure, la consommation en HCl est de 1,5 g par gramme de chlorure de néodyme mis en oeuvre.

Cet essai montre qu'il est très difficile d'obtenir un chlorure de terre rare contenant très peu d'eau. En effet, le traitement indiqué ci-dessus a permis de diminuer la teneur en oxychlorure, mais la teneur en eau est resté toujours élevée. Si la déshydratation avait été poussée à un degré supérieur, la teneur en oxychlorure aurait alors augmenté.

## Revendications

1. Halogénures de terres rares déshydratés, à l'exception des fluorures, caractérisés en ce qu'il contiennent entre 0,01 % poids et 1,5 % poids d'eau et entre 0,01 % et 4 % d'oxyhalogénures de terres rares.

2. Halogénures selon la revendication 1, caractérisés en ce que la teneur en eau est comprise entre 0,01 % et 1 %.

3. Halogénures selon la revendication 2, caractérisés en ce que la teneur en eau est comprise entre 0,01 % et 0,8 %.

4. Halogénures selon l'une des revendications 1 à 3, caractérisés en ce que la teneur en oxyhalogénures est comprise entre 0,01 % et 2 %.

5. Halogénures selon la revendication 4, caractérisé en ce que la teneur en oxyhalogénure est comprise entre 0,01% et 1 %.

6. Halogénures selon l'une des revendications précédentes, caractérisés en ce que l'halogène est le chlore.

7. Halogénures selon l'une des revendications précédentes, caractérisés en ce que les terres rares comprennent les éléments de la famille des lanthanides, y compris l'yttrium.

8. Halogénures selon la revendication 7, caractérisés en ce que les terres rares sont choisies dans le groupe comprenant le lanthane, le néodyme, le praséodyme, l'yttrium, le gadolinium, le cérium.

9. Procédé de déshydratation d'halogénures de terres rares hydratés à l'exception des fluorures, caractérisé en ce qu'il consiste à faire passer à travers un lit d'halogénures à déshydrater un flux gazeux comprenant au moins un composé halogéné déshydratant, le lit d'halogénures étant chauffé et maintenu à une température de séchage comprise entre 150° C et 350° C.

10. Procédé selon la revendication 9, caractérisé en ce que le composé halogéné est choisi dans le groupe comprenant les halogénures d'hydrogène, les halogènes, les halogénures d'ammonium, le tétrachlorure de carbone, $S_2Cl_2$, $SOCl_2$, $COCl_2$ ou leur mélanges.

11. Procédé selon la revendication 9 ou 10, caractérisé en ce que l'halogène de l'halogénure à déshydrater et celui du composé déshydratant sont identiques.

12. Procédé selon la revendication 9, 10 ou 11, caractérisé en ce que le composé déshydratant est utilisé en mélange avec un gaz vecteur tel que l'air, l'azote.

13. Procédé selon l'une des revendications 9 à 12, caractérisé en ce que le composé déshydratant est le chlorure d'hydrogène, le chlore ou un mélange de ceux-ci.

14. Procédé selon l'une des revendications précédentes, caractérisé en ce que l'halogénure hydraté est préséché préalablement à l'étape de déshydratation.

15. Procédé selon la revendication 14, caractérisé en ce que le préséchage est réalisé par chauffage sous pression réduite.

Office européen
des brevets

**RAPPORT DE RECHERCHE EUROPEENNE**

Numero de la demande

EP   90 40 1032
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | "Gmelin, Handbuch der anorganischen Chemie" System no 39, teil 3C,  1976, Springer Verlag, Berlin<br>* page 40, alinéa 3 * | 1-8 | C01F17/00<br>C22B59/00 |
| X | CHEMICAL ABSTRACTS, vol. 78, no. 8, 26 février 1973 Columbus, Ohio, USA L.N.Kommisarova et al.: "Chlorination and dehydration of chloride hydrates in a vibration fluidized bed" page 128; colonne de gauche; ref. no. 45763 C * abrégé * | 9-11, 13 | |
| Y | | 10 | |
| Y | | 12 | |
| Y | CHEMICAL ABSTRACTS, vol. 90, no. 18, avril 1979 Columbus, Ohio, USA M. Strzyzewska et al.: "Production of anhydrous lanthanide and yttrium chlorides" page 105; colonne de droite; ref. no. 139667 Z * abrégé * | 10 | |
| Y | CHEMICAL ABSTRACTS, vol. 75, no. 20, 15 novembre 1971 Columbus, Ohio, USA L.N.Komissarova et al.: "Chlorination of scandium oxide using carbon tetrachloride in a vibrating fluidized bed" page 133; colonne de droite; ref. no. 120365 T * abrégé * | 12 | **DOMAINES TECHNIQUES RECHERCHES (Int. Cl.5 )**<br><br>C01F17/00<br>C01B9/00 |
| A | CHEMICAL ABSTRACTS, vol. 75, no. 24, 13 décembre 1971 Columbus, Ohio, USA J.Kutscher et al.: "Preparation of anhydrous lanthanide halides, especially iodides." page 479; colonne de droite; ref. no. 147241 M * abrégé * | 9-11 | |

Le présent rapport a été établi pour toutes les revendications

| Lieu de la recherche | Date d'achèvement de la recherche | Examinateur |
|---|---|---|
| LA HAYE | 03 JUILLET 1990 | ZALM W.E. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................
& : membre de la même famille, document correspondant

EPO FORM 1503 03.82 (P0402)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| | CHEMICAL REVIEWS.<br>vol. 62, 1962, EASTON US<br>pages 503 - 511; M.D. Taylor:<br>"Preparation of anhydrous lanthanon halides."<br>----- | | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 03 JUILLET 1990 | ZALM W. E. |

EPO FORM 1503 03.82 (P0402)